Europäisches Patentamt

European Patent Office

Office européen des brevets

(19)

(11) **EP 1 123 901 A1**

(12) **EUROPEAN PATENT APPLICATION**

(43) Date of publication:
**16.08.2001  Bulletin 2001/33**

(51) Int Cl.⁷: **C01F 11/46**

(21) Application number: **00830095.6**

(22) Date of filing: **10.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicants:
• **Garcia, Fernando H.**
  **7600 Mar Del Plata (AR)**
• **Pieroni, Armando**
  **7600 Mar del Plata (AR)**
• **Bartolomei, Carlo Alfredo**
  **55036 Pieve a Fosciana (LU) (IT)**

(72) Inventors:
• **Garcia, Fernando H.**
  **7600 Mar Del Plata (AR)**
• **Pieroni, Armando**
  **7600 Mar del Plata (AR)**
• **Bartolomei, Carlo Alfredo**
  **55036 Pieve a Fosciana (LU) (IT)**

(74) Representative: **Celestino, Marco et al**
  **ABM, Agenzia Brevetti & Marchi,**
  **Via A. Della Spina 40**
  **56125 Pisa (IT)**

(54) **Process for the production of di-hydrated calcium sulfate from exhausted sulfuric acid**

(57)     A process for neutralising exhausted sulphuric acid by means of production of di-hydrated calcium sulphate that provides the feeding of sulphuric acid (1) and of a soluble calcium salt (2) in a precipitator (3) for the precipitation of di-hydrated calcium sulphate, which is filtrated in a decantation plant (4), washed (5) and then dried (6,7,8). In the precipitator (4) a liquid acid phase and metal salts in solution remain. The calcium salt (2) can be obtained in a reactor (10) by a ion exchange reaction between a calcium ore (11) based on calcium carbonate and an exchanging acid that is stored (9) downstream the precipitator (3, 4) as liquid phase separated from the calcium sulphate (6) obtaining carbon dioxide (12). In a reactor (13) calcium hydroxide is added (14), whereby the metal hydroxides precipitate and decant in the plant (15). The calcium salt in solution is then stored in the starting reservoir (2). The di-hydrated calcium sulphate has acicular crystals of high quality, whereas the metal hydroxides can be calcinated and with the metal oxides resulting therefrom brick material can be obtained for the building industry.

**Fig. 1**

EP 1 123 901 A1

**Description**

Field of the invention

The present invention relates to the field of the inorganic chemistry and to the environmental field and more precisely it relates to a process for neutralising sulphuric acid baths with the production of di-hydrated calcium sulphate.
Furthermore the invention relates to a plant that carries out this process.

Description of the prior art

It is felt the problem of disposing of and/or regenerating baths of sulphuric acid used in the industry, for example for the production of titanium dioxide and in many other known processes .
Normally, an acid bath is polluted progressively by components removed during a treatment or by products of reaction which, eventually, make it inactive creating dirt in suspension and dispersing undesired solutes as well as metal salts such as iron, titanium, magnesium, aluminium oxides.
Recovering methods are known that are expensive and then not preferred, whereby the exhausted baths are normally given to companies that carry out the neutralisation thereof, which is an expensive process and generates not recyclable waste.
It is also known the neutralisation of exhausted sulphuric acid by means of the production of calcium sulphate. For avoiding a red precipitate a reaction between the exhausted acid and a slurry of calcium carbonate with the control of pH is carried out. This requires however an expensive treatment of the calcium carbonate, which has previously to be brought below a predetermined granulometric range. Furthermore the problem of the impurities present in the exhausted acid is present. Whilst the production of white calcium sulphate is preferred, since it can be used again in many fields, for example for the production of paper, the red calcium sulphate, owing to the presence of ferric oxide it is not recyclable unless as filling material.
For many industriali applications, furthermore, the calcium sulphate must preferably have acicular crystals.

Summary of the invention

It is therefore object of the present invention to provide a process for neutralising exhausted sulphuric acid that is based on simple chemical reactions easy to carry out and allows the production of pure di-hydrated calcium sulphate.
It is another object of the present invention to provide a process for neutralising exhausted sulphuric acid that allows to obtain not only di-hydrated calcium sulphate but also other material useful compounds reducing thus to the minimum the products that cannot be recycled.
It is a particular object of the present invention to provide a process for neutralising exhausted sulphuric acid that allows to obtain di-hydrated calcium sulphate with acicular crystals of high quality.
It is another particular object of the present invention to provide a process for neutralising exhausted sulphuric acid that allows to obtain not only the di-hydrated calcium sulphate but also other compounds for example useful for the production tiles of "cotto toscano" or other brick material.
These and other objects are achieved by the process according to the present invention, whose characteristic is that it comprises the steps of:

- feeding exhausted sulphuric acid in a precipitator, said sulphuric acid having impurities comprising metal sulphates;
- preparing a aqueous solution with a soluble calcium salt, the anion of said soluble calcium salt being capable of forming soluble metal salts for ion exchange reaction with said metal sulphates;
- adding the soluble calcium salt in the precipitator, for the precipitation of di-hydrated calcium sulphate and production of an exchanging acid and of metal salts in solution by means of ion exchange reaction respectively between the ions H$^+$ or the metal cations and said anions of the soluble calcium salt;
- gathering the di-hydrated calcium sulphate precipitated with the separation of the aqueous solution of the exchanging acid with the metal salts in solution;
- washing of the precipitate to obtain pure di-hydrated calcium sulphate.

The calcium salt can be obtained by a ion exchange reaction between a calcium ore based on calcium carbonate and an exchanging acid chosen among hydrochloric acid, nitric acid, perchloric acid.
Preferably said exchanging acid is hydrochloric acid and the soluble calcium salt is calcium chloride. The soluble metal salts are then metal chlorides, for example

$$MgCl_2 + AlCl_3 + FeCl_3 + TiCl_4$$

According to an advantageous aspect of the invention the calcium chloride $CaCl_2$ is produced causing calcium carbonate to react with said aqueous solution of hydrochloric acid, that contains the metal chlorides in solution, said metal salts in solution being then precipitated with the addition of calcium hydroxide, obtaining insoluble metal hydroxides, after the precipitation remaining only calcium chloride.

Said metal hydroxides, after being precipitated and filtrated for separating the calcium chloride, are then calcinated, giving metal oxides that can be $TiO_2$, $Al_2O_3$, $Fe_2O_3$, MgO.

As particular embodiment of the present invention, said metal oxides can be separated from one another or used together for other application in the field of the building industry.

In particular, if said metal oxides are mainly $Al_2O_3$ and $Fe_2O_3$ they don't need to be refined and can be used again together, along with hemi-hydrated calcium sulphate $CaSO_4.0,5H_2O$ and $MgSO_4$, to obtain a composition used to make tiles of the type "cotto toscano".

The hemi-hydrated calcium sulphate can be obtained for example from the reaction of calcination of calcium sulphate so called "red" normally resulting from certain processes of neutralisation of the sulphuric acid.

Alternatively, the purification of the metal salts can be carried out , in particular the metal chlorides present in the acid solution separated from the di-hydrated calcium sulphate, thus obtaining $TiO_2$, MgO, $Al_2O_3$ and $Fe_2O_3$.

The metal oxides can comprise mainly MgO that is recycled, along with white hemi-hydrated calcium sulphate $CaSO_4.0.5H_2O$, $MgSO_4$ and $SiO_2$, to obtain a mixture for making brick material .

The magnesium chloride can be separated from the other metal chlorides present in the acid solution isolating it by means of a sulphonic resin $RSO_3H$ of exchange with the hydrochloric acid.

Brief description of the drawings

Further characteristics and/or the advantages of the process and of the plant according to the present invention will be made clearer with the following description of an embodiment thereof, exemplifying but not limitative, with reference to the attached drawings wherein:

- figure 1 shows a block diagram of a process according to the invention of neutralising acid baths obtaining di-hydrated calcium sulphate;
- figure 2 shows a flow-sheet of the block diagram of figure 1;
- figure 3 shows a block diagram of an embodiment of the process of figure 1;
- figure 4 shows a flow-sheet of the block diagram of the process of figure 3 in addition to the flow-sheet of figure 2;
- figure 5 shows a diagrammatical view of a plant for filtered on used for separating the di-hydrated calcium sulphate by a liquid acid solution.

Furthermore the process according to the invention will be made clearer from the examples given hereinafter, also not limitative.

Description of the preferred embodiments

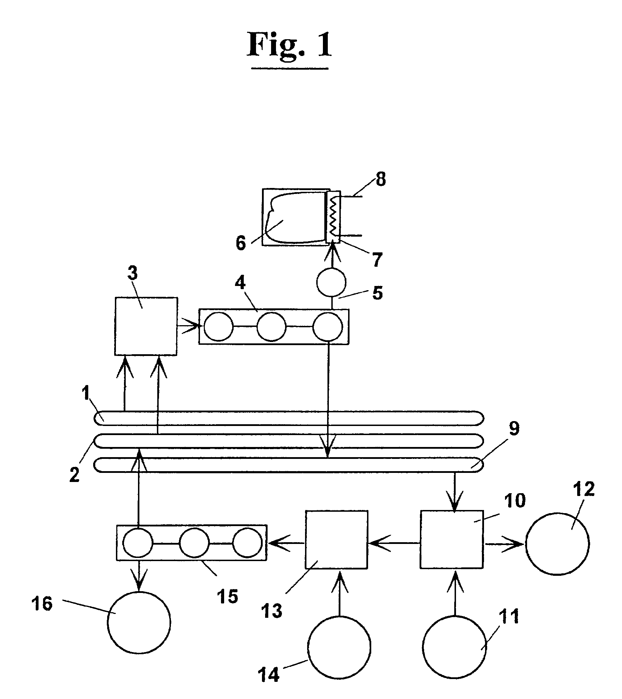

With reference to figure 1, a solution of exhausted sulphuric acid that has to be neutralised containing impurities such as metal sulphates is stored in a container 1. The latter is located downstream of a duct not shown coming from a plant wherein the sulphuric acid has been used, for example a plant for the production of titanium dioxide.

At the same time, a aqueous solution is prepared of a soluble calcium salt and stored in a container 2. The anion of this soluble calcium salt is chosen in order to be capable of forming soluble metal salts for ion exchange reaction with the metal sulphates present in the sulphuric acid 1.

The exhausted sulphuric acid 1 and the soluble salt 2 are mixed in a precipitator 3 for the precipitation of di-hydrated calcium sulphate, which is filtrated in a plant for decantation 4, washed in 5 and then dried in 6, for example by means of deposition of the calcium sulphate with an excess of water on a perforated rotating drum 7 in which passes through hot air 8, for example coming from an oven for calcination.

In the precipitator 4 remain in liquid phase acid and metal salts in solution, as resulting from the ion exchange reaction respectively between the ions $H^+$ and the metal cations coming from 1 with the anions of the soluble calcium salt coming from 2.

The calcium salt 2 can be obtained in a reactor 10 by a ion exchange reaction between a calcium ore 11 based on calcium carbonate and an exchanging acid chosen among hydrochloric acid, nitric acid, perchloric acid. This exchanging acid is that formed in reservoir 9 downstream the precipitator 3, 4 as liquid phase separated from the calcium sulphate 6. In the reaction that is carried out in 10 carbon dioxide is formed that is stored in a reservoir 12. For separating the calcium salt that is formed in reactor 10 from the soluble metal salts present in the acid 9, in a reactor 13 calcium hydroxide is added 14, whereby metal hydroxides precipitate that decant in plant 15. The calcium salt in solution is then stored in the starting reservoir 2.

In case the exchanging acid is hydrochloric acid, the reaction that is carried out in 3 and in 4 is:

$$H_2SO_4 + M_X(SO_4)_{X+1} + CaCl_2 + H_2O \rightarrow CaSO_4.2H_2O\downarrow + HCl + M_XCl_{X+1}$$

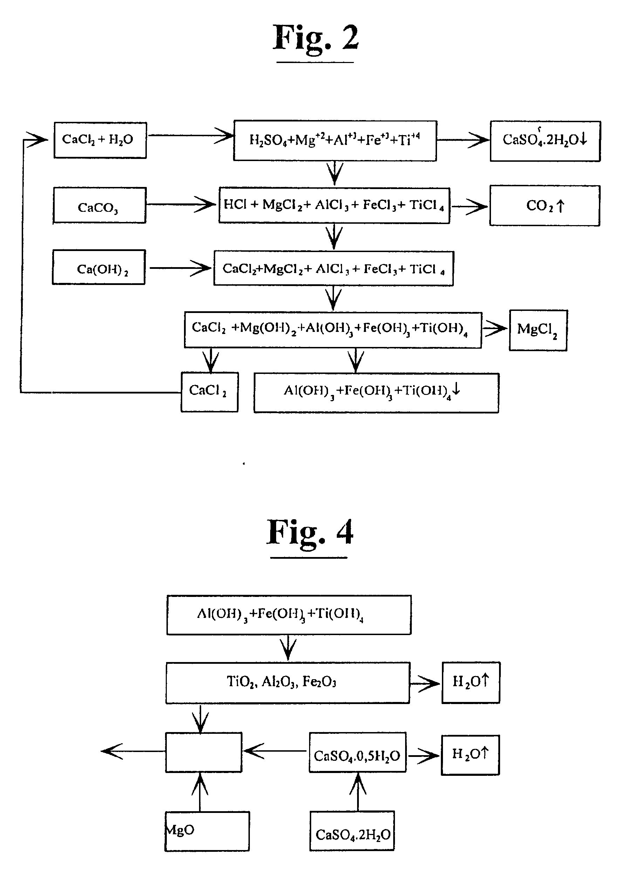

wherein $M_X$ is a metal ion present as impurities in the sulphuric acid 1, whereas $M_XCl_{X+1}$ is a soluble metal chloride obtained for ion exchange reaction with said metal ion. For example, with reference to the flow-sheet of figure 2 the metal ions $M^{X+}$ are $Mg^{2+}$, $Fe^{3+}$, $Ti^{4+}$, $Al^{3+}$.

Always as shown in the diagram of figure 2 the calcium chloride $CaCl_2$ is produced causing calcium carbonate to react $CaCO_3$ with the hydrochloric acid HCl and metal chlorides in solution. The reaction is:

$$HCl + MCl_2 + MCl_3 + MCl_4 + CaCO_3 \rightarrow CaCl_2 + H_2O + MCl_2 + MCl_3 + MCl_4$$

and in particular, the metal chlorides $MCl_X$ in solution are

$$MgCl_2 + AlCl_3 + FeCl_3 + TiCl_4 + H_2O$$

Then, the metal chlorides in solution are precipitated with the addition of lime Ca $(OH)_2$, controlling the pH, obtaining insoluble metal hydroxides:

$$CaCl_2 + H_2O + MCl_2 + MCl_3 + MCl_4 + Ca(OH)_2 \rightarrow CaCl_2 + M(OH)_2 + M(OH)_3 + M(OH)_4$$

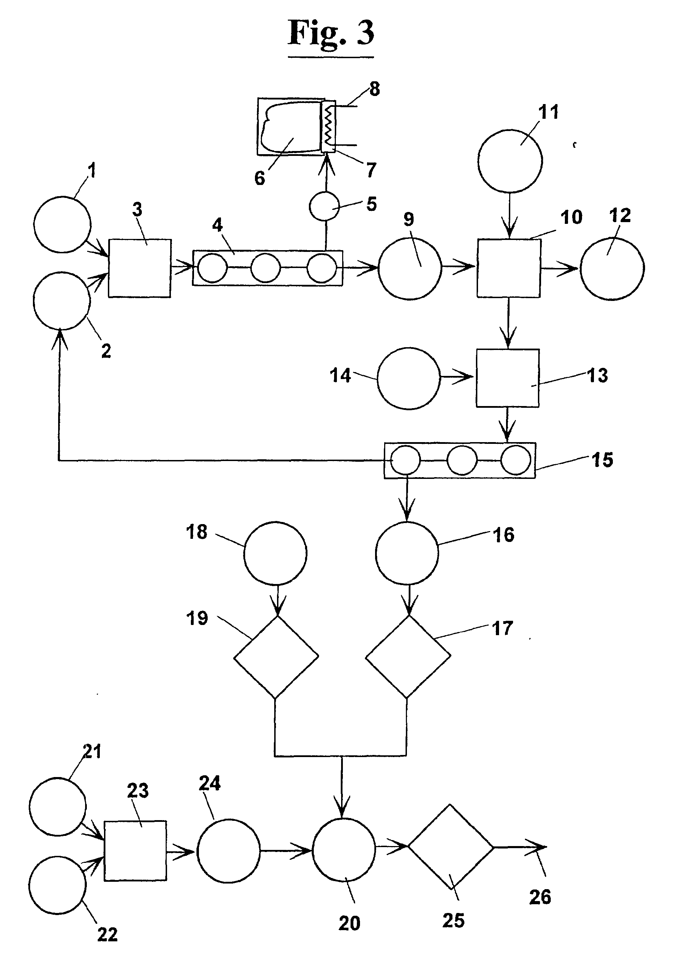

With reference also to figure 3, once separated the calcium chloride from the metal hydroxides precipitated and filtered , which are in particular

$$Mg(OH)_2 + Al(OH)_3 + Fe(OH)_3 + Ti(OH)_4$$

after reaction of calcination in oven 17 metal oxides are formed according to the reaction:

$$M(OH)_2 + M(OH)_3 + M(OH)_4 \rightarrow MO + MO_2 + MO_3 + H_2O\uparrow$$

Said metal oxides can be $TiO_2$, $Al_2O_3$, $Fe_2O_3$, MgO.

Always according to an aspect of the present invention, the metal oxides $TiO_2$, $Al_2O_3$, $Fe_2O_3$, MgO can be separated from one another or used together for other applications.

Or, before of the reaction with the calcium hydroxide, the magnesium chloride can be separated from the other metal chlorides present in the acid solution by means of a sulphonic resin $RSO_3H$ according to the reaction:

$$2RSO_3H + MgCl_2 \rightarrow Mg(RSO_{3)2} + 2HCl$$

Once saturated the sulphonic resin this is separated from the acid solution obtaining again the magnesium chloride from the reaction:

$$Mg(RSO_{3)2} + 2HCl \rightarrow 2RSO_3H + MgCl_2$$

then, the acid solution resulting therefrom can react as above described with the calcium hydroxide for precipitation of the metal hydroxides and the separation of the calcium chloride.

With reference to figure 3, if the metal oxides solid deriving from the calcination in an oven 17 are mainly

$Al_2O_3$ and $Fe_2O_3$ they can be recycled together with hemi-hydrated calcium sulphate $CaSO_4.0, 5H_2O$ and $MgSO_4$, obtaining the composition used to make tiles of the type "cotto toscano".

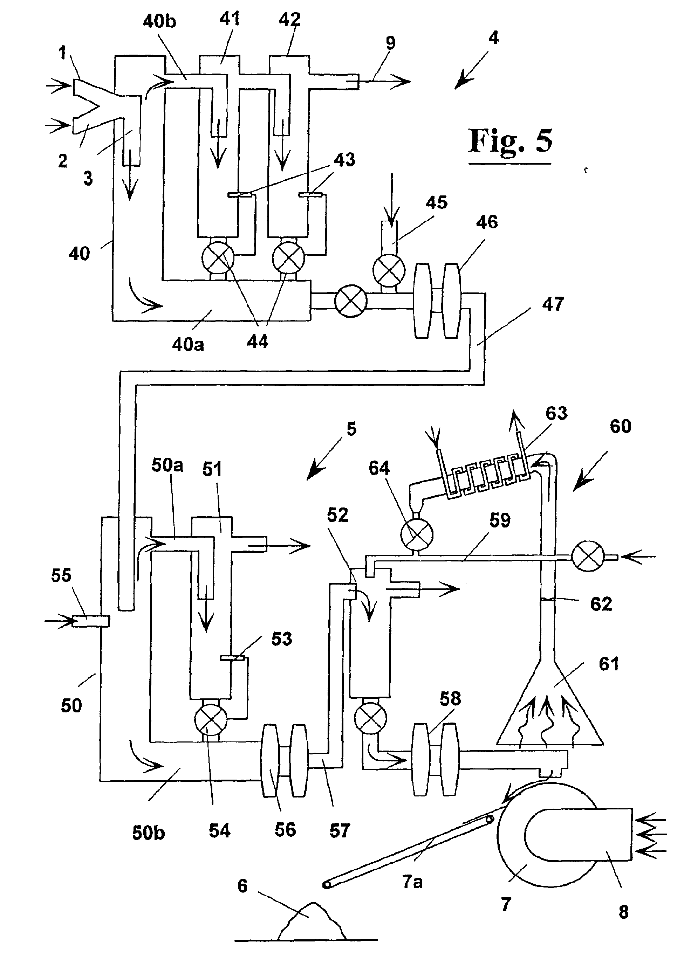

Also with reference to figure 4 the reaction for preparing $MgSO_4$, can be:

$$MgO+ H_2SO_4 \rightarrow MgSO_4 + H_2O$$

wherein $H_2SO_4$ is again the exhausted sulphuric acid and MgO is one of the metal oxides obtained by the calcination of the metal hydroxides as above described.

The hemi-hydrated calcium sulphate can be obtained by the reaction of calcination of calcium sulphate so called "red" normally resulting from certain known processes of neutralization of the sulphuric acid:

$$CaSO_4.2H_2O \rightarrow CaSO_4.0,5H_2O + H_2O\uparrow$$

Therefore, with reference again to figure 3, the metal hydroxides present in reservoir 16 and calcinated in oven 17 for forming $Al_2O_3$ and $Fe_2O_3$ can be united in the container 20 to the hemi-hydrated calcium sulphate obtained by the red calcium sulphate 18 calcinated in the oven 19 as well as to the sulphate magnesium 24, obtained by the reaction in 23 of magnesium oxide 21 and sulphuric acid 22.

The mixture resulting from can be cast in tiles and put in oven 25 to obtain at 26 tiles of "cotto toscano", of typical colour red owing to $Fe_2O_3$ and very resistant owing to corundum $Al_2O_3$.

The diagrammatical view of figure 1 is a preferred embodiment for storing of liquid reagents or products of reaction . In particular, such liquid are stored in containers 1, 2, 9 of elongated shape suitable for being arranged in channels under road level of the plant. This way, there is an easy access of such liquid without bulky containers rising from the ground.

The precipitator 4 and the washing system 5 of figure 1 can be made in a preferred way as shown in figure 5. Precipitator 4 comprises a tank 40 that extends vertically with a height at least four times the diameter. The container 40 has at the bottom a horizontal duct 40a for gathering the precipitate whereas at the top has an outlet duct 40b of decanted liquid . Into the top of tank 40 the exhausted sulphuric acid 1 flows with the relative impurities and calcium chloride 2, which combine in a reactor 3. The hydrochloric acid and the soluble metal chlorides come at first into the purification tank 41 and then the purification tank 42 leaving that on the bottom possible precipitates are deposited of di-hydrated calcium sulphate. Turbidity sensors 43 open gates 44 for discharging in the horizontal duct 40a of tank 40 the calcium sulphate Accumulated. Downstream the horizontal duct 40a a washing duct 47 follows that at 45 receives washing water and then crosses a double diaphragm pump 46.

The diagrammatical view of the washing plant 5 is similar to that of the precipitator 4, since the suspension of calcium sulphate and water that comes from duct 47 reaches the vertical duct of a washing tank 50 where water jets 55 flow, for example river water.

The washed calcium sulphate decants to horizontal duct 50b, whereas the water and possible acid residues skim from the outlet located at the top 50a for reaching a further decantation tank 51. The calcium sulphate that deposits on the bottom of the tank 51 once achieved a level signalled by the turbidity sensor 53 is redelivered to the horizontal duct 50b. Then, through a duct 57, pushed by a double diaphragm pump 56, it reaches a further washing tank 52 with distilled water poured in through a duct 59. The washing water skims at the top from the tank 52, whereas the calcium sulphate washed, by means of a double diaphragm pump 58 is deposited on the perforated drying roller 8 and then scraped off and accumulated in 6 for being stored and transported for sale or direct use.

The aria hot 8 comes for example from the ovens of calcination 17 and 19 of figure 3.

The vapour deriving from the drying of the calcium sulphate can be distilled in the plant 60 after having been gathered by a cap 61 and ducts by means of a fan 62 through a refrigerator 63, example cooling coils or nests of tubes crossed by cold water. The distilled water is discharged into washing duct 59 of the tank 52 through a gate 64.

Examples

a) In order to obtain white calcium sulphate that can be used for the production of gypsum/cardboard elements a solution of exhausted sulphuric acid is provided, that contains impurities such as $Mg^{2+}$, $Fe^{3+}$, $Ti^{4+}$, $Al^{3+}$ ions and other metal sulphates.

The sulphuric acid is provided by a chemical plant for the production of titanium dioxide at a concentration of 98 g/l and temperature 50°C.

In a reactor for precipitation the acid is mixed to a solution of $CaCl_2$ at the 10% p/v and kept at a temperature of 50°. This way is obtained calcium sulphate of high quality.

Starting from a supply of 2,4 tons/hour of sulphuric acid and 2,7 tons/hour of calcium chloride are obtained stoichiometrically 4,2 tons/hour of calcium sulphate. Since an excess of 15% of calcium chloride is necessary, the flow rate must be of 2,7*1,15= 3,15 tons/hour.

The calcium sulphate is then washed four times using about 600 litres of river water for every ton. The purified calcium sulphate , diluted with 9 times in mass of distilled water, homogenized , has given a pH of 6,6 and a conductivity of 1,5 microsiemens. The shape of the thereof crystals is acicular of high quality.

b) Per the recovering metal oxides from the reaction

$$H_2SO_4 + Mg^{2+} + Fe^{3+} + Ti^{4+} + Al^{3+} + CaCl_2 + H_2O \rightarrow$$

$$CaSO_4.2H_2O\downarrow + HCl + MgCl_2 + AlCl_3 + FeCl_3 + TiCl_4 + H_2O,$$

once separated the calcium sulphate calcium carbonate is added for preparing calcium chloride. Then the metal chlorides are precipitated with the addition of calcium hydroxide. Bringing the pH to 5.6 at first $Fe(OH)_3$ + Ti $(OH)_4$ precipitate. Then, bringing the pH to 11,5 Mg $(OH)_2$ + $Al(OH)_3$ precipitate. The metal hydroxides precipitated are calcinated at 1000° obtaining a solid mixture (A) containing both ferric oxide at high resistance to wear and artificial corundum of high hardness and resistance. With 25000 l/hour of sludge containing exhausted sulphuric acid 1.3 tons/hour are obtained of solid mixture (A) of metal oxides.

At the same time di-hydrated red calcium sulphate is calcinated at 1000° to obtain hemi-hydrated calcium sulphate (B).

Part of the solid mixture (A) reacts with the exhausted sulphuric acid up to neutralising it so that the magnesium oxide MgO forms magnesium oxy-sulphate $MgSO_4$ in solution (C). The other metal oxy-sulphates are used as filler. Preparing a solid mixture (A) + (B) with 75% of (A) and 25% of (B) and adding the liquid (C) further diluted in water up to 12%, a mixture is obtained that is heated to 75° and then moulded into tiles that are baked in oven, obtaining "cotto toscano".

c) With reference to the example b), by precipitating $Fe(OH)_3$ + $Ti(OH)_4$ + $Al(OH)_3$ with pH less than 11, $Mg(OH)_2$ can be obtained rising the pH to 11.5.

After calcination MgO is obtained.

A light brick material can be obtained from the mixture

| | |
|---|---|
| $CaSO_4.0.5H_2O$ white | 25% |
| MgO | 20% |
| $SiO_2$ | 30% |
| $MgSO_4$ (solution 12%) | 25% |

that is heated up to 75° and then moulded into tiles that are baked in oven.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A process for neutralising exhausted sulphuric acid by means of production of di-hydrated calcium sulphate **characterised in that** it comprises the steps of:

   - feeding exhausted sulphuric acid in a precipitator, said sulphuric acid having impurities comprising metal sulphates;
   - preparing an aqueous solution with a soluble calcium salt, the anion of said soluble calcium salt being capable of forming soluble metal salts for ion exchange reaction with said metal sulphates;
- adding said soluble calcium salt in the precipitator, for the precipitation of di-hydrated calcium sulphate, and production of an exchanging acid and of metal salts in solution by means of ion exchange reaction between the anions of the soluble calcium salt respectively with the ions $H^+$ and with the metal cations;
- gathering the di-hydrated calcium sulphate precipitated and separating the aqueous solution of the exchanging acid with the metal salts in solution;
- washing the precipitate to obtain pure di-hydrated calcium sulphate.

2. Process according to claim 1, wherein said calcium salt is obtained by a ion exchange reaction between a calcium ore based on calcium carbonate and an exchanging acid chosen among hydrochloric acid, nitric acid, perchloric acid.

3. Process according to claim 2, wherein said exchanging acid is hydrochloric acid and said soluble calcium salt is calcium chloride.

4. Process according to claim 3, wherein said soluble metal salts are metal chlorides, for example $MgCl_2$, $AlCl_3$, $FeCl_3$, $TiCl_4$, said calcium chloride $CaCl_2$ being produced from the reaction of calcium carbonate with an aqueous solution of hydrochloric acid, that contains said metal chlorides in solution, said metal chlorides in solution being then precipitated with the addition of calcium hydroxide, obtaining insoluble metal hydroxides, after the precipitation thereof only calcium chloride soluble being present.

5. Process according to claim 4, wherein said metal hydroxides precipitated are filtrated for separating the calcium chloride, are then calcinated, giving metal oxides.

6. Process according to claim 5, wherein said metal oxides are mainly $Al_2O_3$ and $Fe_2O_3$ and are recycled together, along with hemi-hydrated calcium sulphate $CaSO_4.0,5H_2O$ and $MgSO_4$, to obtain a composition used to make tiles of the type "cotto toscano".

7. Process according to claim 6, wherein said hemi-hydrated calcium sulphate is obtained by the reaction of calcination of calcium sulphate so called "red" normally resulting from processes of neutralisation of sulphuric acid.

8. Process according to claim 6, wherein said $MgSO_4$ is obtained by the reaction:

$$MgO + H_2SO_4 \rightarrow MgSO_4 + H_2O,$$

said $H_2SO_4$ being said exhausted sulphuric acid and said MgO being present in a mixture of metal oxides obtained by the calcination according to claim 5.

9. Process according to claim 5, wherein said metal oxides comprise mainly MgO that is recycled, along with white hemi-hydrated calcium sulphate $CaSO_4.0,5H_2O$, $MgSO_4$ and $SiO_2$ to obtain a composition used to make brick material.

10. Process according to claim 5, wherein the magnesium chloride is separated from the other metal chlorides present in the acid solution by isolating it through a sulphonic resin $RSO_3H$ according to the reaction:

$$2RSO_3H + MgCl_2 \rightarrow Mg(RSO_3)_2 + 2HCl,$$

once saturated the sulphonic resin this is separated from the acid solution obtaining again the magnesium chloride from the reaction

$$Mg(RSO_3)_2 + 2HCl \rightarrow 2RSO_3H + MgCl_2.$$

# Fig. 1

# Fig. 2

```
┌──────────────┐      ┌─────────────────────────────────┐      ┌──────────────────┐
│ CaCl₂ + H₂O  │ ───► │ H₂SO₄+Mg⁺²+Al⁺³+Fe⁺³+Ti⁺⁴       │ ───► │ CaSO₄.2H₂O↓      │
└──────────────┘      └─────────────────────────────────┘      └──────────────────┘
                                      │
                                      ▼
┌──────────────┐      ┌─────────────────────────────────┐      ┌──────────────────┐
│ CaCO₃        │ ───► │ HCl + MgCl₂+ AlCl₃+ FeCl₃+ TiCl₄ │ ───► │ CO₂↑             │
└──────────────┘      └─────────────────────────────────┘      └──────────────────┘
                                      │
                                      ▼
┌──────────────┐      ┌─────────────────────────────────┐
│ Ca(OH)₂      │ ───► │ CaCl₂+MgCl₂+ AlCl₃+ FeCl₃+ TiCl₄ │
└──────────────┘      └─────────────────────────────────┘
                                      │
                                      ▼
              ┌──────────────────────────────────────────────┐      ┌────────┐
              │ CaCl₂ +Mg(OH)₂+Al(OH)₃+Fe(OH)₃+Ti(OH)₄       │ ───► │ MgCl₂  │
              └──────────────────────────────────────────────┘      └────────┘
                        │                   │
                        ▼                   ▼
              ┌────────┐         ┌──────────────────────────────────┐
              │ CaCl₂  │         │ Al(OH)₃+Fe(OH)₃+Ti(OH)₄↓        │
              └────────┘         └──────────────────────────────────┘
```

$$CaCl_2 + H_2O \rightarrow H_2SO_4 + Mg^{+2} + Al^{+3} + Fe^{+3} + Ti^{+4} \rightarrow CaSO_4 \cdot 2H_2O \downarrow$$

$$CaCO_3 \rightarrow HCl + MgCl_2 + AlCl_3 + FeCl_3 + TiCl_4 \rightarrow CO_2 \uparrow$$

$$Ca(OH)_2 \rightarrow CaCl_2 + MgCl_2 + AlCl_3 + FeCl_3 + TiCl_4$$

$$CaCl_2 + Mg(OH)_2 + Al(OH)_3 + Fe(OH)_3 + Ti(OH)_4 \rightarrow MgCl_2$$

$$CaCl_2 \qquad Al(OH)_3 + Fe(OH)_3 + Ti(OH)_4 \downarrow$$

# Fig. 4

$$Al(OH)_3 + Fe(OH)_3 + Ti(OH)_4$$

$$\downarrow$$

$$TiO_2, Al_2O_3, Fe_2O_3 \rightarrow H_2O \uparrow$$

$$\leftarrow \square \leftarrow CaSO_4 \cdot 0,5H_2O \rightarrow H_2O \uparrow$$

$$MgO \qquad\qquad CaSO_4 \cdot 2H_2O$$

# Fig. 3

**Fig. 5**

European Patent Office

**EUROPEAN SEARCH REPORT**

Application Number

EP 00 83 0095

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHEMICAL ABSTRACTS, vol. 82, no. 26, 1975 Columbus, Ohio, US; abstract no. 174945, MORIMOTO, Y: "Waste sulfuric acid" XP002143050 * abstract * & JP 49 120893 A (DAIDO CHEMICAL IND. CO. LTD) 19 November 1974 (1974-11-19) --- | 1-4 | C01F11/46 |
| A | US 5 733 070 A (ANGELL EDWIN CHARLES) 31 March 1998 (1998-03-31) * column 5, line 10 - line 29 * * claims 1,7; example 3 * --- | 1,2 | |
| A | GB 2 128 597 A (DAVY MCKEE) 2 May 1984 (1984-05-02) * claims 1,9,20 * --- | 1,3,5,8, 10 | |
| A | CHEMICAL ABSTRACTS, vol. 121, no. 6, 1994 Columbus, Ohio, US; abstract no. 62209, KATAYAMA, K; ISHIDA, K.; FUKUDA, T.: "Preparation of low-sulfur sludges for ironmaking from wastewaters" XP002143051 * abstract * & JP 06 122930 A (NISSHIN STEEL CO. LTD. ) 6 May 1994 (1994-05-06) ----- | 1,3,4 | **TECHNICAL FIELDS SEARCHED (Int.Cl.7)** C01F |

The present search report has been drawn up for all claims

| Place of search | Date of completion of the search | Examiner |
|---|---|---|
| THE HAGUE | 20 July 2000 | Siebel, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 00 83 0095

This annex lists the patent family members relating to the patent documents cited in the above–mentioned European search report.
The members are as contained in the European Patent Office EDP file on
The European Patent Office is in no way liable for these particulars which are merely given for the purpose of information.

20-07-2000

| Patent document cited in search report | | Publication date | Patent family member(s) | | Publication date |
|---|---|---|---|---|---|
| JP 49120893 | A | 19-11-1974 | NONE | | |
| US 5733070 | A | 31-03-1998 | US | 5590983 A | 07-01-1997 |
| GB 2128597 | A | 02-05-1984 | AU | 2019683 A | 03-05-1984 |
| | | | ES | 527014 D | 01-05-1985 |
| | | | ES | 8504961 A | 16-07-1985 |
| | | | PT | 77524 A,B | 01-11-1983 |
| | | | ZA | 8307552 A | 27-06-1984 |
| JP 06122930 | A | 06-05-1994 | NONE | | |

EPO FORM P0459

For more details about this annex : see Official Journal of the European Patent Office, No. 12/82